Europäisches Patentamt

European Patent Office

Office européen des brevets

(11) Numéro de publication : **0 452 217 A1**

## (12) DEMANDE DE BREVET EUROPEEN

(21) Numéro de dépôt : 91400963.4

(22) Date de dépôt : 10.04.91

(51) Int. Cl.⁵ : **A01G 31/02, A01G 9/14**

(30) Priorité : 10.04.90 FR 9004581

(43) Date de publication de la demande :
16.10.91 Bulletin 91/42

(84) Etats contractants désignés :
AT BE CH DE DK ES FR GB GR IT LI LU NL SE

(71) Demandeur : **Kunstmann, Michel**
**F-30390 Aramon (FR)**

(72) Inventeur : **Kunstmann, Michel**
**F-30390 Aramon (FR)**

(74) Mandataire : **Martin, Jean-Jacques et al**
**Cabinet REGIMBEAU 26, Avenue Kléber**
**F-75116 Paris (FR)**

(54) **Agencement de serre pour la culture hors sol, notamment la culture des rosiers.**

(57)    L'invention concerne un agencement de serre pour la culture hors sol, notamment la culture des rosiers.
Selon l'invention, il est prévu au moins une tubulure en U (2) disposée à distance du sol et dans un plan sensiblement horizontal, cette tubulure étant parcourue par un fluide destiné au chauffage de la serre, et servant également par ses deux branches (3) de moyen de supportage surélevé pour des empilages (100 ; 101) organisant la culture hors sol ; chaque empilage comporte un bloc inférieur de support (11) en matériau thermiquement isolant, surmonté d'un bloc de substrat de culture hors sol (13), la canalisation des eaux d'arrosage étant assurée par la présence d'une plaque collectrice (14) dirigée vers une gouttière de réception associée (15) également supportée par la tubulure en U (2).
Application à la culture hors sol des rosiers en vue de densités de cultures élevées.

# FIG_1

La présente invention concerne le domaine de la culture hors sol en serre, et plus particulièrement la culture des rosiers.

A la différence de la culture en pleine-terre, on développe dans certains pays le concept d'une culture hors-sol en serre, notamment pour les rosiers.

Selon ce concept, la technique actuellement utilisée consiste à disposer une bâche tissée sur le sol, sur laquelle on pose des pains de polystyrène expansé que l'on recouvre d'une bâche de couverture. Sur chacun de ces pains ainsi recouverts, on dispose un pain de laine de roche ensaché dans un sac troué en matière plastique, et surmonté d'un cube en laine de roche dans lequel est planté le rosier : les racines du rosier, en se développant, s'étendent ainsi dans le pain de laine de roche. On pourra par exemple se référer au document EP-A-O 169 687.

Une telle technique présente plusieurs inconvénients.

Tout d'abord, les creux séparant les pains de polystyrène expansé reçoivent l'écoulement des eaux d'arrosage, ce qui génère une accumulation d'eau dans laquelle viennent tremper les feuilles mortes et aussi les parties basses du végétal. Ceci oblige le personnel à intervenir fréquemment sur place pour enlever les végétaux et nettoyer les bâches, avec de surcroît les difficultés qui résultent de l'accessibilité limitée inhérente à l'agencement.

De plus, dans la plupart des cas, le chauffage de la serre est assuré par une circulation d'eau chaude passant dans des tuyaux en U posés à même le sol sur la bâche tissée, ou sur des planches en bois reposant sur ladite bâche : de ce fait, le personnel accède aux différents emplacements de culture en marchant entre les branches des tuyaux en U, et en piétinant les feuilles mortes qui s'y trouvent accumulées. L'alternance de rangées de culture et de tuyaux en U définissant des allées de passage limite considérablement la densité de culture que l'on peut espérer obtenir : à titre indicatif, on parvient à obtenir au mieux une densité d'environ 7,5 rosiers par m$^2$ avec de telles serres, ce qui est certes meilleur que la densité moyenne en culture plein-sol (environ 5,5 à 6 rosiers par m$^2$), mais reste encore relativement limité.

Enfin, cette disposition reste peu satisfaisante pour la facilité du travail sur les végétaux, non seulement du fait que le personnel doit se baisser pour chaque intervention, mais aussi en raison de l'accès limité et malaisé aux parties inférieures des végétaux.

L'état de la technique est également illustré par les documents EP-A-O 300 536, EP-A-O 165 356, US-A-2 491 271 et DE-U-87 13 639.

L'invention a pour objet de proposer un agencement de serre plus performant que les techniques précitées, en permettant non seulement d'améliorer l'accessibilité aux végétaux, mais aussi de diminuer l'encombrement, ce qui permet d'envisager des densités de culture très supérieures, dépassant par exemple 10 rosiers par m$^2$.

L'invention a également pour objet de réaliser un agencement de serre limitant les opérations de nettoyage et de surveillance.

L'invention a aussi pour objet de proposer un agencement de serre facilitant le travail de coupe et de taille sur les végétaux, même pour des densités très élevées.

Il s'agit plus particulièrement d'un agencement de serre pour la culture hors sol, notamment la culture des rosiers, caractérisé par le fait qu'il comporte au moins une tubulure en U disposée à distance du sol et dans un plan sensiblement horizontal, ladite tubulure étant parcourue par un fluide destiné au chauffage de la serre, et servant également par ses deux branches de moyen de supportage surélevé pour des empilages organisant la culture hors sol, chaque empilage comportant un bloc inférieur de support en matériau thermiquement isolant, ledit bloc étant surmonté d'au moins un bloc de substrat de culture hors sol avec interposition d'une plaque collectrice permettant de canaliser l'écoulement des eaux d'arrosage vers une gouttière de réception associée également supportée par la tubulure en U.

De préférence, l'agencement selon l'invention comporte une pluralité de profilés disposés transversalement sur les branches de la tubulure en U, de façon à constituer des traverses de support sur lesquelles reposent les empilages et la ou les gouttières de réception associées. Il va de soi que l'on pourrait également concevoir une structure unique grillagée, sous forme d'un cadre rigide, mais un tel mode de réalisation serait moins souple et plus encombrant.

Avantageusement dans ce cas, les profilés formant traverses supportent également des tuyaux d'alimentation en goutte à goutte permettant d'assurer une alimentation permanente en eau et/ou en solution nutritive.

Il est par ailleurs intéressant que chaque bloc inférieur de support se présente sous la forme d'un pain allongé, disposé sensiblement parallèlement aux branches de la tubulure en U, la face supérieure dudit pain étant inclinée pour favoriser l'écoulement des eaux d'arrosage vers la gouttière associée ; dans certains cas, certains au moins des blocs inférieurs de support peuvent être constitués de deux pains empilés l'un sur l'autre, avec interposition d'un matériau isolant formant écran thermique, ce qui permet de réduire encore l'influence thermique de la tubulure chauffante sur les végétaux.

De préférence, chaque bloc inférieur de support est surmonté d'un bloc de substrat se présentant également sous la forme d'un pain allongé, ledit bloc de substrat supportant directement une pluralité de blocs unitaires en laine de roche ; en particulier, le bloc de substrat est un pain en fibres de bois ou en laine de roche, dont la face inférieure est inclinée en correspondance avec la face supérieure du bloc inférieur de support. Il va de soi que l'on pourrait également envisager une plantation directe dans le substrat, ce qui permettrait de supprimer la présence des blocs unitaires précités, mais la souplesse et l'accessibilité individuelle seraient alors légèrement moins favorables.

De façon avantageuse, les blocs inférieurs de support sont en polystyrène expansé ou analogue.

Selon un mode particulier de réalisation, les profilés formant traverses sont maintenus transversalement en position sur les branches de la tubulure en U, par exemple au moyen de cornières rapportées en forme de C, avec possibilité d'un coulissement longitudinal sur lesdites branches.

En variante, les profilés formant traverses sont mobiles transversalement, grâce à un montage roulant des branches de la tubulure en U sur des rails associés, de façon à pouvoir déplacer simultanément tous les empilages supportés par les branches de cette tubulure en U, ladite tubulure en U comportant alors des connecteurs à rotation libre aux deux extrémités de chacune de ses branches. Une telle variante permet encore d'accroître les densités de culture, en atteignant par exemple des densités supérieures à 13 rosiers par m².

De préférence alors, des entretoises rigides sont prévues entre les branches de la tubulure en U de façon à préserver le parallélisme desdites branches lors du roulement, lesdites entretoises étant fixées auxdites branches par des colliers à roulement. Il est également intéressant de prévoir que certains profilés présentent à leurs extrémités une butée pour limiter la course de déplacement, ladite butée contactant en fin de course l'une ou l'autre branche de la tubulure en U selon le sens du déplacement, et/ou que des éléments rigides sont prévus pour raccorder entre eux certains profilés, afin de rigidifier l'ensemble mobile constitué par ces profilés.

Il est possible d'envisager que les profilés formant traverses supportent deux rangées parallèles de blocs inférieurs de support mis bout à bout, ces deux rangées étant distantes l'une de l'autre pour définir un couloir central permettant de loger la ou les gouttières de réception associées et les éventuels tuyaux d'alimentation en goutte à goutte.

En variante, les profilés formant traverses peuvent supporter deux rangées parallèles de blocs inférieurs de support mis bout à bout, ces deux rangées étant accolées l'une à l'autre pour définir deux couloirs latéraux permettant de loger les deux gouttières de réception associées et les éventuels tuyaux d'alimentation en goutte à goutte.

Selon une autre variante également envisageable, les profilés formant traverses supportent plus de deux rangées parallèles de blocs inférieurs de support mis bout à bout, en particulier trois rangées, ces rangées étant distantes l'une de l'autre pour définir des couloirs permettant de loger la ou les gouttières de réception associées et les éventuels tuyaux d'alimentation en goutte à goutte.

De préférence, et pour toutes les variantes précitées, les rangées parallèles de blocs inférieurs de support sont disposées de manière à ne pas être directement au-dessus d'une des branches de la tubulure en U.

Avantageusement aussi, la ou les plaques collectrices sont réalisées sous la forme d'une feuille souple en matière plastique, et la ou les gouttières de réception associées sont réalisées sous la forme d'un tuyau fendu longitudinalement, dont la fente longitudinale reçoit le bord inférieur d'extrémité des feuilles souples pour la canalisation de l'écoulement des eaux d'arrosage.

En variante, la ou les plaques collectrices sont réalisées sous la forme d'une tôle cintrée présentant une portion inférieure en gouttière, et la ou les gouttières de réception associées sont réalisées sous la forme d'un tube sur lequel est disposé transversalement ladite portion inférieure, un rivet évidé assurant simultanément la liaison mécanique entre ladite tôle cintrée et ledit tube et l'écoulement des eaux d'arrosage dans ledit tube. Selon un mode de réalisation particulier, la portion inférieure de la tôle cintrée est solidarisée par le rivet évidé à un petit manchon cylindrique dans lequel passe le tube alors percé au niveau dudit rivet évidé.

Avantageusement alors, chacun des blocs de substrat est légèrement incliné selon sa direction longitudinale et est enveloppé par une gaine souple présentant une incision au voisinage de l'extrémité basse dudit bloc de substrat, une étroite tôle cintrée étant associée à chaque bloc de substrat et étant alors seulement prévue au niveau de l'incision correspondante.

Par ailleurs, si la disposition est fixe, il est intéressant que la tubulure en U soit supportée par une succession de plots, dont la hauteur est choisie pour favoriser le travail à effectuer sur les végétaux concernés et la surveillance de la culture, tout en étant suffisante pour ménager une accessibilité en dessous du niveau de ladite tubulure en U permettant un entretien aisé du sol, en particulier entre 0,2 et 0,6 mètre.

Si la disposition est mobile, avec déplacement transversal sur des rails, on prévoira de préférence que les rails de la tubulure en U sont supportés par une succession de plots, dont la hauteur est choisie pour favoriser le travail à effectuer sur les végétaux concernés et la surveillance de la culture, tout en étant suffisante pour ménager une accessibilité en dessous du niveau desdits rails permettant un entretien aisé du sol, en particulier entre 0,2 et 0,6 mètre.

De préférence également, la tubulure en U, ou à tout le moins les deux branches de celle-ci, est réalisée en métal, tandis que la ou les gouttières de réception et les éventuels tuyaux d'alimentation en goutte à goutte sont en matière plastique.

Il est enfin intéressant que les profilés formant traverses présentent une longueur permettant de disposer jusqu'à six rangées parallèles de tubulures en U par chapelle, en particulier entre 0,65 et 0,95 mètre.

D'autres caractéristiques et avantages de l'invention apparaîtront plus clairement à la lumière de la description qui va suivre et des dessins annexés, concernant des modes de réalisation particuliers, en référence aux figures où :

    – la figure 1 est une vue en élévation d'un agencement de serre conforme à l'invention, avec quatre rangées de tubulures en U supportant chacune deux rangées parallèles d'empilages pour la culture hors sol ;

    – la figure 2 est une vue de dessus d'une rangée, permettant également de distinguer les moyens de raccordement des tubulures en U aux conduites d'alimentation en fluide chauffant ;

    – la figure 3 est une vue en coupe d'une rangée, à échelle agrandie, permettant de mieux distinguer la structure des empilages supportés par la tubulure en U, ainsi que certains détails d'équipements associés ;

    – la figure 4 illustre une variante de la figure 1, dans laquelle des rangées de tubulures en U supportent chacune trois rangées parallèles d'empilages pour la culture hors sol, ce qui permet d'accroître la densité de culture ;

    – la figure 5 est une vue partielle en perspective de l'agencement de la figure 4 ;

    – la figure 6 illustre une autre variante dans laquelle les branches des tubulures en U sont également utilisées comme moyens de roulement, de sorte que les rangées sont mobiles transversalement ;

    – la figure 7 est une vue partielle en perspective de l'agencement de la figure 6, montrant également la disposition des profilés formant traverses qui sont ici aménagés pour tenir compte de cette possibilité de déplacement transversal ;

    – les figures 8a et 8b sont deux vues analogues à celle de la figure 6, illustrant le positionnement variable d'une allée de passage, par simple déplacement transversal d'une ou plusieurs rangées (ici deux), ce qui permet d'augmenter encore l'utilisation de l'espace disponible et d'accroître ainsi la densité de culture ;

    – la figure 9 est une vue en coupe analogue à celle de la figure 3, illustrant une variante dans laquelle la plaque collectrice des eaux d'arrosage n'est pas une feuille souple dont l'extrémité inférieure arrive dans une fente du tuyau de drainage associé, mais est une tôle cintrée rivetée à un tube de drainage associé, l'écoulement se faisant alors par un rivet évidé ;

    – la figure 10 est une coupe transversale de détail, illustrant le rivetage d'une telle tôle cintrée sur le tube de drainage ;

    – la figure 11 est une vue partielle de dessus illustrant une variante dans laquelle la tôle cintrée est rivetée sur un petit manchon cylindrique dans lequel passe le tube de drainage, et la figure 12 est la coupe associée selon XII-XII ;

    – la figure 13 est une vue de dessus analogue à la figure 2, correspondant à une telle variante à plaques collectrices en forme de tôles cintrées.

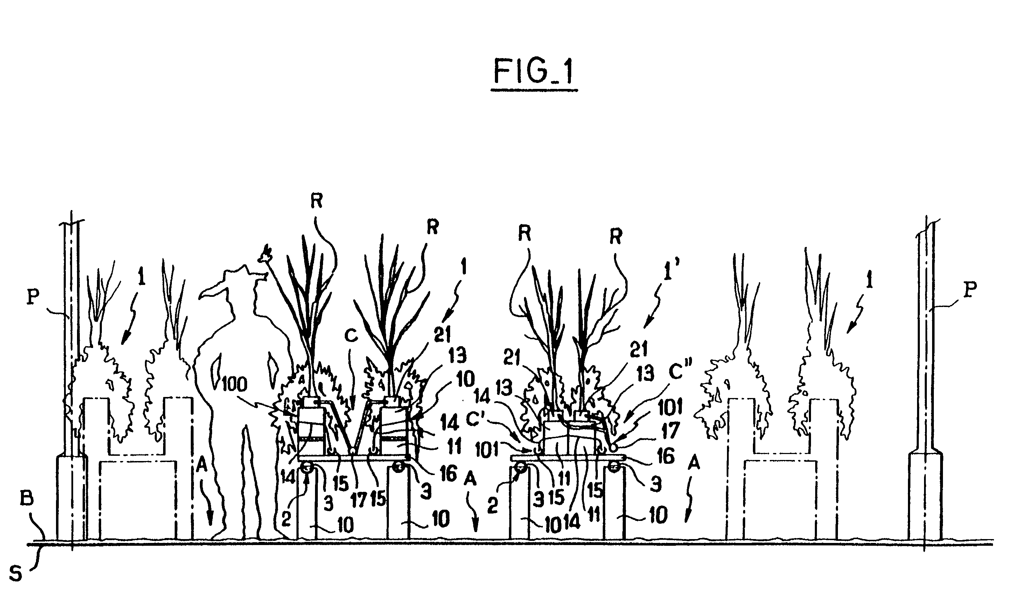

La figure 1 illustre un agencement de serre conforme à l'invention, pour la culture hors sol, notamment la culture des rosiers. L'agencement de serre qui va être décrit peut naturellement être utilisé pour la culture hors sol d'autres végétaux, en arbuste ou non.

La figure 1 permet ainsi de distinguer un agencement 1, qui comporte au moins une tubulure en U 2 disposée à distance du sol et dans un plan sensiblement horizontal, ladite tubulure étant parcourue par un fluide destiné au chauffage de la serre, et servant également par ses deux branches 3 de moyen de supportage surélevé pour des empilages 100 organisant la culture hors sol. Chaque empilage 100 comporte un bloc inférieur de support 11 en matériau thermiquement isolant, ce bloc étant surmonté d'au moins un bloc de substrat de culture hors sol 13, avec interposition d'une plaque collectrice 14 permettant de canaliser l'écoulement des eaux d'arrosage vers une gouttière de réception associée 15 également supportée par la tubulure en U 2.

La tubulure en U 2 est supportée par une succession de plots 10, dont la hauteur est choisie pour favoriser le travail à effectuer sur les végétaux concernés et la surveillance de la culture, tout en étant suffisante pour ménager une accessibilité en dessous du niveau de ladite tubulure permettant un entretien aisé du sol : la hauteur des plots sera par exemple choisie entre 0,2 et 0,6 mètre.

La figure 1 illustre une portion de serre, avec, sur le sol S, une bâche tissée B, et une chapelle délimitée par deux poteaux de serre P. Avec l'agencement de serre selon l'invention, on peut disposer dans la chapelle une pluralité de rangées parallèles de tubulures en U 2, chaque tubulure étant supportée par ses plots respectifs 10. Entre deux rangées adjacentes, le personnel dispose d'un passage libre A constituant une allée, lui permettant d'évoluer librement le long de chacune des rangées, et de travailler aisément et confortablement compte tenu de la surélévation des empilages des végétaux, avec en outre une accessibilité optimale à toutes les parties des végétaux R de ces empilages, en particulier leurs parties inférieures. Il convient également de noter que la surélévation favorise de surcroît l'épanouissement des rosiers, du fait du dégagement de ses parties inférieures, ce qui constitue un avantage supplémentaire par rapport aux agencements connus dans lesquels les parties inférieures des rosiers s'étendaient sur le sol et étaient de ce fait fréquemment abimées par piétinement.

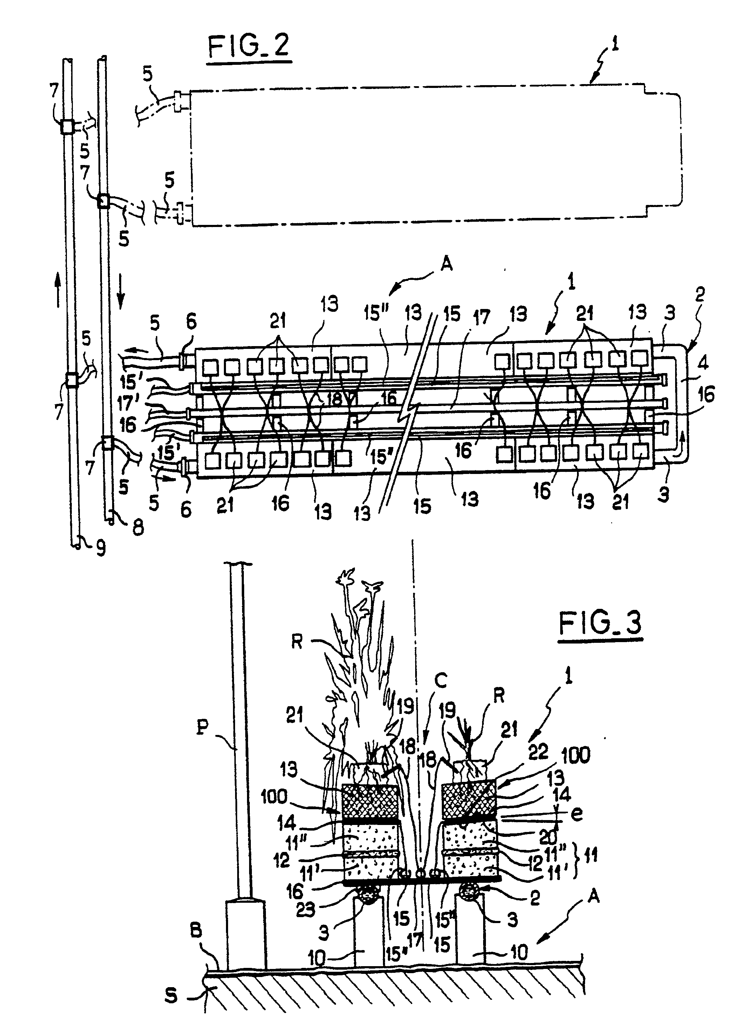

La vue de dessus de la figure 2 permet de mieux distinguer les moyens de raccordement des tubulures en U 2 aux conduites d'alimentation en fluide chauffant. La tubulure en U présente ainsi une branche centrale 4 et deux branches latérales 3, en extrémité desquelles sont prévus des connecteurs de raccordement 6, permettant la liaison d'un tuyau flexible de raccordement 5 dont l'autre extrémité est montée sur un organe de connexion 7 comportant une vanne d'arrêt (non représentée). L'alimentation en fluide de chauffage comporte une tuyauterie d'aller 8 et une tuyauterie de retour 9, et chacune des tubulures en U 2 est raccordée à ces deux tuyauteries par les organes de connexion associés 7. A titre indicatif, la tubulure en U 2 pourra être réalisée en métal, avec un diamètre intérieur de 0,05 mètre pour un débit de passage suffisant en eau chaude ; cette tubulure en U pourra présenter une branche centrale 4 d'environ 0,10 mètre, et des branches latérales 3 dont la longueur pourra aller de 30 à 100 mètres, en étant en général de l'ordre d'une cinquantaine de mètres.

La tubulure en U 2 de chaque agencement de serre 1 remplit ainsi une double fonction, dans la mesure où elle assure d'une part la circulation du fluide de chauffage, et d'autre part le supportage surélevé des empilages 100 organisant la culture hors sol.

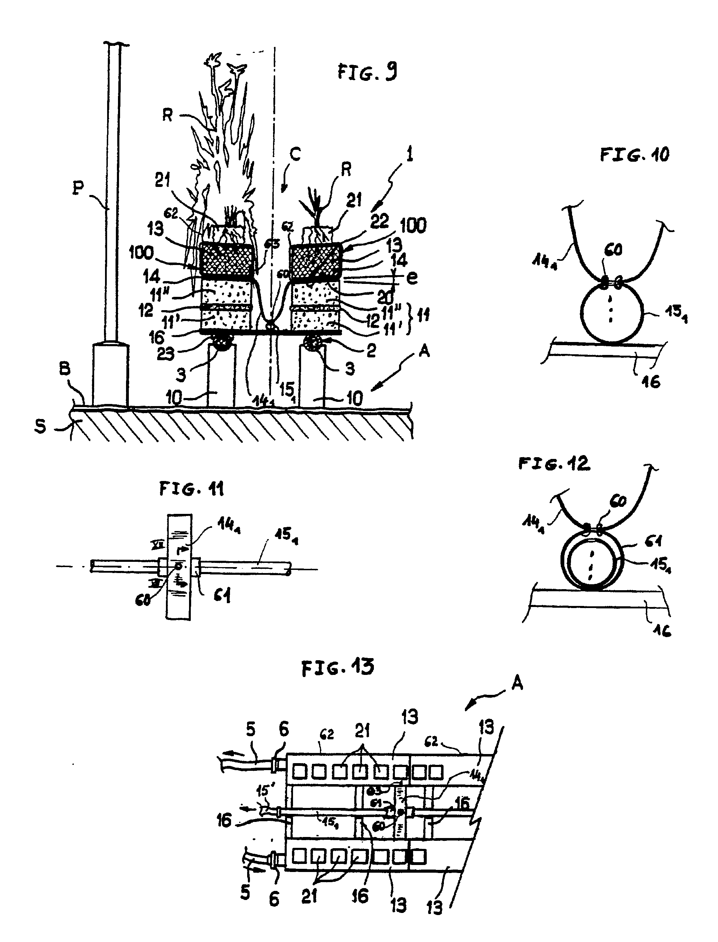

Les empilages précités reposent ici sur une pluralité de profilés 16 disposés transversalement sur les branches 3 de la tubulure en U 2, de façon à constituer des traverses de support sur lesquelles ils reposent, ces traverses supportant également les gouttières de réception associées 15. Les profilés 16 formant traverses supportent également des tuyaux d'alimentation en goutte à goutte 17 permettant d'assurer une alimentation permanente en eau et/ou en solution nutritive. Ainsi que cela est mieux visible sur la figure 3 qui illustre l'agencement de serre 1 à une échelle agrandie, les gouttières de réception 15 sont ici réalisées sous la forme d'un tuyau fendu longitudinalement, dont la fente longitudinale 15" reçoit le bord inférieur d'extrémité des plaques collectrices 14 de canalisation d'écoulement alors réalisées sous la forme d'une feuille souple en matière plastique. Une variante de ce mode de réalisation sera décrite plus loin, en référence aux figures 9 à 13.

De préférence, chaque bloc inférieur de support 11 se présente sous la forme d'un pain allongé, par exemple en polystyrène expansé, disposé sensiblement parallèlement aux branches 3 de la tubulure en U 2, la face supérieure 20 dudit pain étant inclinée (selon sa direction transversale) selon un angle e pour favoriser l'écoulement des eaux d'arrosage vers la gouttière associée 15 ; à titre indicatif, l'angle e pourra être de l'ordre d'une dizaine de degrés. Les eaux d'écoulement peuvent ainsi ruisseler contre la feuille souple 14, laquelle peut être ou non commune à plusieurs empilages d'une même rangée, et pénètrent par la fente 15" dans la gouttière associée 15 qui repose sur les profilés 16. Comme cela est visible sur la figure 2, une tuyauterie d'évacuation 15' est associée à chacune des gouttières 15. Il convient de noter qu'une telle disposition permet de bien ranger les gouttières 15 dans le couloir central C délimité par les deux rangées parallèles d'empilages 100. Les moyens d'alimentation en goutte à goutte se présentent quant à eux sous la forme d'un tuyau 17 s'étendant longitudinalement au voisinage des gouttières 15, en reposant sur les profilés 16, ledit tuyau présentant une série de dérivations 18 qui se terminent chacune par une aiguille de sortie 19 plantée dans le substrat associé à chaque rosier R. Il convient d'observer que le tuyau d'alimentation 17, en reposant directement sur les profilés 16, profite indirectement de l'effet thermique de la tubulure en U, de sorte que l'eau d'arrosage se trouve amenée à une température favorable. Comme cela est visible sur la figure 2, l'alimentation en goutte à goutte est raccordée à une tuyauterie d'entrée associée 17' reliée au tuyau 17.

Les gouttières 15 et le tuyau d'alimentation en goutte à goutte 17 sont ainsi rangés sur les profilés 16, dans le couloir central C, sans risque de tomber sur le sol de la serre. De cette façon, l'accessibilité de l'espace situé en dessous des profilés 16 reste totalement libre, ce qui permet d'envisager un nettoyage aisé du sol, au besoin par des moyens mécanisés.

L'effet thermique favorable précité pour l'eau d'arrosage doit cependant être combattu au niveau des empilages 100, afin d'éviter un chauffage direct des rosiers R. Une telle rupture thermique est obtenue en prévoyant des blocs inférieurs de support 11 en matériau thermiquement isolant, présentant un dimensionnement suffisant. Ainsi que cela est illustré sur la figure 3, il est possible d'envisager des blocs inférieurs de support 11 constitués de deux pains 11', 11" empilés l'un sur l'autre, avec interposition d'un matériau isolant 12 formant écran thermique. On pourra utiliser des pains 11' et 11" en polystyrène expansé, le matériau isolant 12 pouvant alors être une mousse de polyuréthane extrudé haute densité. Si cela s'avère nécessaire, il est également possible de prévoir une fine couche de mousse de polyuréthane (non représentée ici) entre les profilés 16 et les pains inférieurs 11'.

Il est naturellement possible d'organiser différemment la disposition des empilages sur les profilés 16, afin notamment d'éviter que les empilages ne se trouvent à la verticale des branches 3 de la tubulure en U 2. La figure 1 illustre ainsi deux types d'agencement de serre 1 et 1': l'agencement 1 est tel que les profilés 16 supportent deux rangées parallèles de blocs inférieurs de support 11 mis bout à bout, ces deux rangées étant distantes l'une de l'autre pour définir un couloir central C permettant de loger les gouttières de réception 15 et les tuyaux d'alimentation en goutte à goutte 17. Selon une variante également illustrée sur la figure 1, l'agencement de serre l'est tel que les deux rangées parallèles de blocs inférieurs de support 11 mis bout à bout sont accolées l'une à l'autre, pour définir deux couloirs latéraux C' et C" permettant de loger les gouttières 15 et les tuyaux d'alimentation en goutte à goutte 17 : on notera qu'avec une telle disposition, les empilages alors notés 101 ne sont pas à la verticale des branches latérales 3 de la tubulure en U 2. Il est dans ce cas tout à fait possible de prévoir un bloc inférieur de support 11 réalisé sous la forme d'un pain allongé unique, à la différence de l'agencement de serre 1 précédemment décrit.

Il convient de noter que les profilés 16 remplissent également une fonction supplémentaire de diffuseur de chaleur qui permet d'utiliser une eau moins chaude pour la même température de serre recherchée. En effet, la diffusion thermique est limitée verticalement au niveau des empilages 100 ou 101, mais point en dehors de ces empilages, de sorte que chaque profilé présente une zone libre chauffée qui participe au chauffage de la serre : à titre indicatif, une température de 50 à 60°C sera suffisante dans la pratique, alors que les tubulures des agencements de serre connus, disposées à même le sol, étaient utilisées pour faire circuler une eau à une température de l'ordre de 70°C. En tout état de cause, on est assuré, grâce à la présence des pains de polystyrène expansé 11 (simples pains, ou doubles pains 11', 11") que la température reste toujours inférieure à 20°C au niveau du bloc de substrat associé à chaque rosier R, ce qui est fondamental pour le développement correct des racines des rosiers.

On peut envisager une plantation directe dans un bloc de substrat de même dimensionnement que les pains constituant les blocs inférieurs 11, ou encore, comme cela est illustré ici, prévoir que chaque bloc inférieur de support 11 est surmonté d'un bloc de substrat 13 se présentant également sous la forme d'un pain allongé, mais ledit bloc de substrat supportant directement une pluralité de blocs unitaires 21 en laine de roche. Ledit bloc de substrat 13 sera de préférence réalisé en fibres de bois ou en laine de roche, sous la forme d'un pain de même longueur que les blocs inférieurs 11, c'est-à-dire de l'ordre de un mètre. Chaque bloc de substrat 13 supporte ainsi une pluralité de cubes de laine de roche 11, par exemple six à sept cubes. Cette disposition, mieux visible sur la figure 2, permet d'obtenir une densité de culture très importante. Il va de soi que chaque bloc de substrat 13 présentera de préférence une face inférieure 22 inclinée en correspondance avec la face supérieure 20 du bloc inférieur de support 11, c'est-à-dire selon l'angle e précité. Les aiguilles d'alimentation 19 sont en l'espèce piquées dans les cubes de laine de roche 21, l'alimentation en eau et/ou en solution nutrivite étant organisée pour un débit de l'ordre de deux litres par heure, et ce pour chaque rosier R dont les racines se développent dans le cube de laine de roche 21, puis dans le bloc de substrat adjacent 13. Il va de soi que les matériaux constitutifs du substrat de culture hors sol ne sont cités qu'à titre d'exemple, et l'on pourra utiliser d'autres substrats convenant à une telle culture. On dispose ainsi d'un site de bouturage et d'enracinement initial du plan à la fois favorable et aisément accessible.

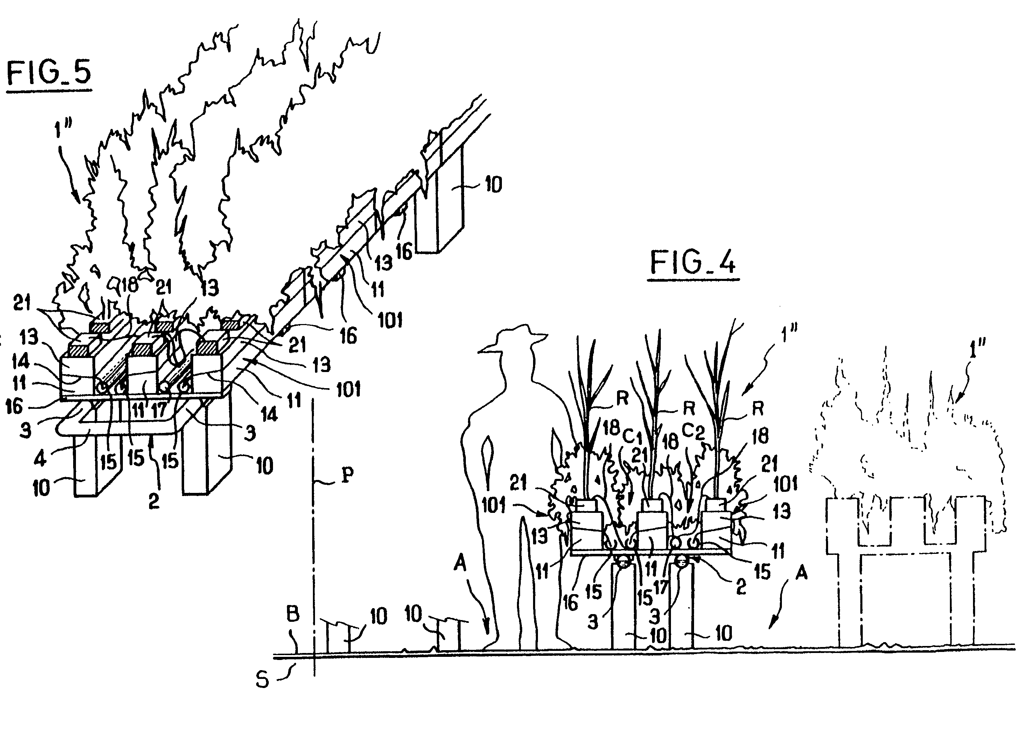

Il est naturellement possible d'envisager que les profilés 16 formant traverses supportent plus de deux rangées parallèles de bloc inférieur de support 11 mis bout à bout : les figures 4 et 5 illustrent ainsi une variante d'agencement 1" selon laquelle les profilés 16 supportent trois rangées parallèles de blocs inférieurs de support 11 mis bout à bout, ces rangées étant distantes l'une de l'autre pour définir des couloirs $C_1$ et $C_2$ permettant de loger les gouttières de réception associées 15 et les éventuels tuyaux d'alimentation en goutte à goutte 17. Cette disposition est bien équilibrée, et permet notamment de disposer des empilages 101 de telle façon que les branches latérales 3 de la tubulure en U se trouvent au niveau des couloirs $C_1$ et $C_2$ précités, donc pas en dessous des empilages 101, ce qui permet d'utiliser, ainsi que cela a été expliqué plus haut, un pain inférieur unique 11 en polystyrène expansé. Il est préférable qu'une gouttière de réception 15 soit associée à chaque empilage 101, alors que le tuyau d'alimentation en goutte à goutte 17 peut fort bien être commun à tous les empilages : comme cela est visible sur les figures 4 et 5, le couloir $C_1$ reçoit ainsi deux gouttières 15, tandis que le couloir $C_2$ reçoit une gouttière 15 et un tuyau d'alimentation en goutte à goutte 17, tuyau d'alimentation duquel partent trois dérivations 18 en direction des cubes de laine de roche 21 associés. Une telle disposition permet naturellement d'accroître la densité de culture envisageable, et il sera aisé de parvenir à une densité dépassant dix rosiers au m$^2$ avec une telle disposition, ce qui est très supérieur à la densité que l'on pouvait obtenir avec les meilleures serres traditionnelles.

Les variantes qui viennent d'être décrites, comportant une ou plusieurs rangées parallèles de blocs inférieurs de support 11 mis bout à bout, sont des variantes dites fixes, dans la mesure où les profilés 16 formant traverses ne peuvent pas se déplacer transversalement sur les branches 3 de la tubulure en U 2 associée. A cet effet, pour éviter tout glissement intempestif des profilés 16, on pourra prévoir un maintien transversal en position assuré par des cornières rapportées 23 en forme de C, étant entendu que l'on conserve encore la possibilité d'un coulissement longitudinal sur les branches 3 de la tubulure en U 2, ce qui permet de positionner convenablement les profilés 16 sur ces branches 3. On pourra naturellement utiliser d'autres types de profilés avec une section raidisseuse longitudinalement, par exemple les profilés en forme de plateaux, avec des bords présentant des échancrures semi-circulaires pour le passage des branches 3 de la tubulure en U 2 ; il est également possible d'envisager un raccordement de certains profilés entre eux pour constituer un sous-ensemble de support intermédiaire. Les profilés 16 formant traverses présentent de préférence une longueur permettant de disposer jusqu'à six rangées parallèles de tubulure en U 2 par chapelle, en particulier une longueur se situant entre 0,65 et 0,95 mètre. Il convient à ce titre de rappeler que les largeurs de chapelle sont de plus en plus souvent normalisées, les largeurs actuellement rencontrées étant de l'ordre de 6,40 mètres.

On va maintenant décrire une autre variante dans laquelle les branches latérales des tubulures en U sont également utilisées comme moyens de roulement, de sorte que les rangées sont mobiles transversalement.

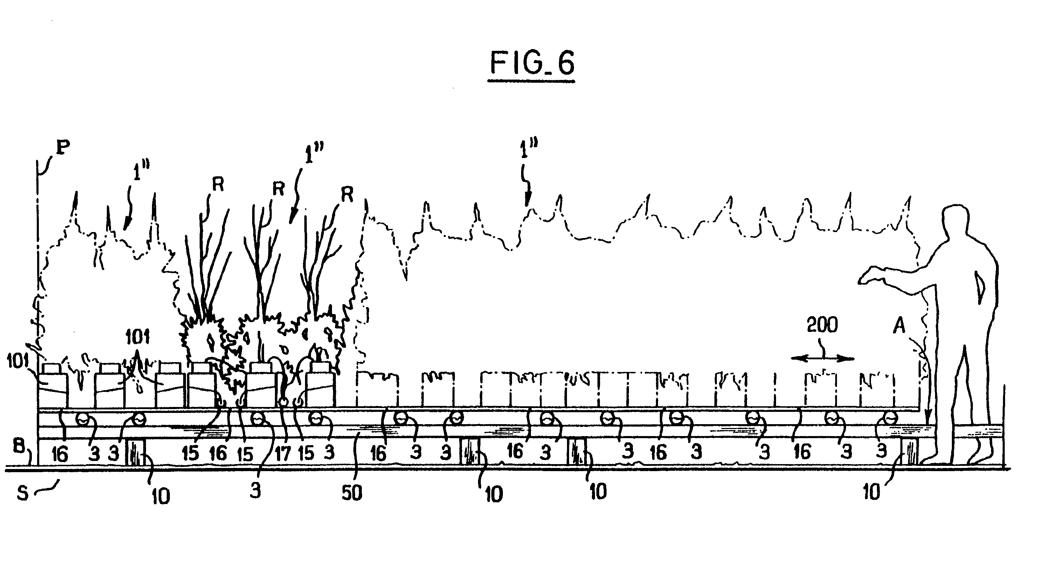

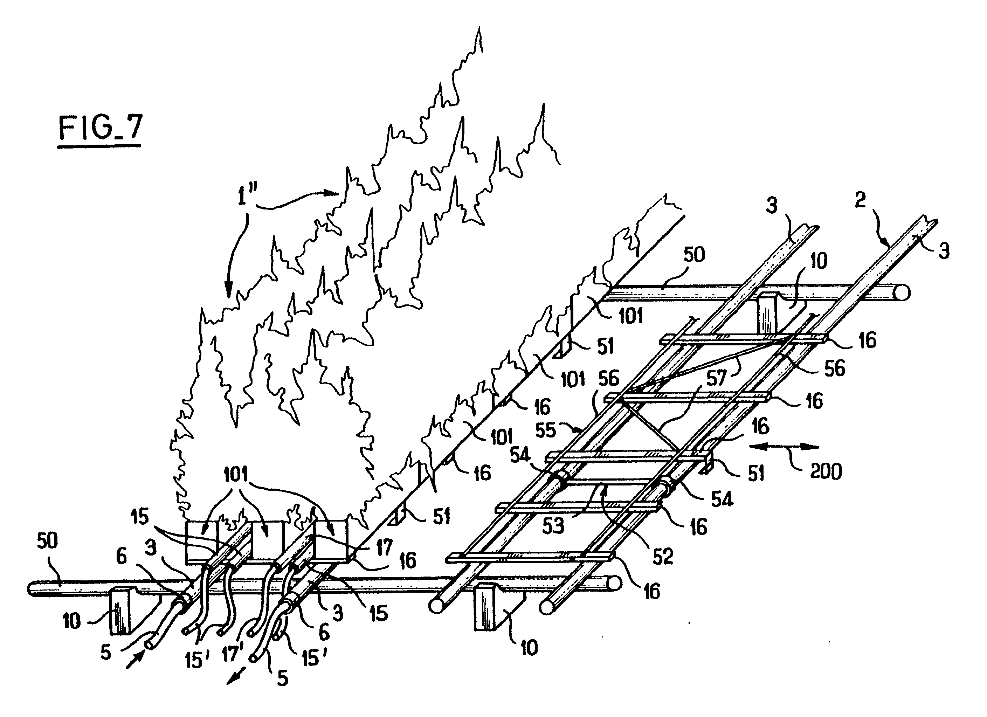

Une telle variante est illustrée aux figures 6 et 7.

Les profilés 16 formant traverses supportent ici des empilages 101, disposés selon trois rangées parallèles conformément à l'agencement 1″ précédemment décrit. Cependant, les profilés 16 sont dans ce cas mobiles transversalement grâce à un montage roulant des branches 3 de la tubulure en U 2 sur des rails associés 50, de façon à pouvoir déplacer simultanément tous les empilages 100 ou 101 supportés par ces branches 3. Selon cette disposition, les plots 10 supportent des rails 50, de préférence réalisés sous la forme de tubes métalliques de section ronde, rails au-dessus desquels sont disposées les branches 3 de chaque tubulure en U 2. Il va de soi que la rotation autour de leur axe de chacune de ces branches ne doit pas induire de torsion indésirable au niveau d'une part de la branche centrale de chaque tubulure en U, et d'autre part des tuyauteries de raccordement : à cet effet, la tubulure en U comporte des connecteurs en rotation libre aux deux extrémités de chacune de ses branches 3, de tels connecteurs 6 étant visibles sur la figure 7, disposés entre chaque extrémité des branches 3 et la tuyauterie en U dont les branches seraient disposées à l'intérieur de deux tubes allongés formant moyen de roulement et de protection de ces branches.

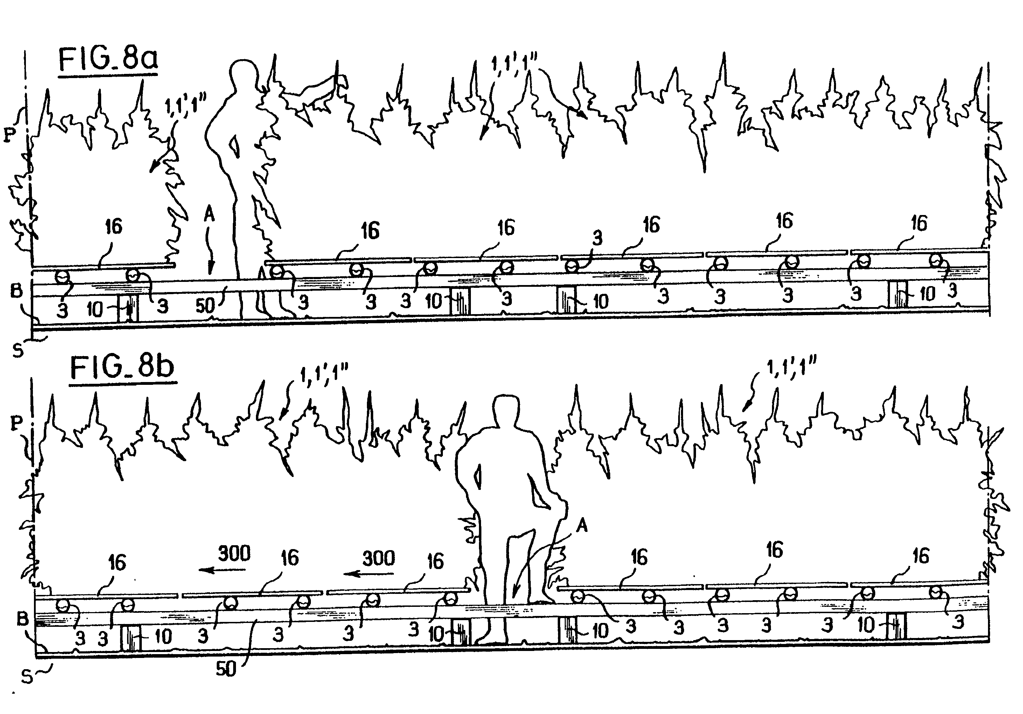

Avec cet agencement mobile, il est possible de déplacer en bloc, dans une direction transversale, telle que schématisée par la flèche 200 sur la figure 6, l'une quelconque des rangées associée à une tubulure en U 2. Sur la figure 6, l'allée A est située en extrémité de chapelle, mais par simple déplacement de rangées, il est aisé d'organiser l'allée A à un autre endroit afin d'accéder aux végétaux concernés. Cette possibilité est illustrée aux figures 8a et 8b : sur la figure 8a, on distingue dans une chapelle une rangée du côté gauche, et cinq rangées du côté droit, définissant ainsi une allée A ; si l'on déplace deux des cinq rangées de droite vers la gauche selon la flèche 300, l'allée A est alors disposée comme illustré sur la figure 8b.

Il conviendra naturellement de disposer convenablement chacun des profilés 16 sur les deux branches 3 de la tubulure en U associée 2, afin que le déplacement transversal puisse s'effectuer normalement et sans risque, dans un sens ou dans l'autre. A titre indicatif, pour un profilé dont la longueur est de l'ordre d'un mètre, les profilés du groupe de cinq sur la figure 8a sont tels que la branche de gauche de la tubulure en U se trouve environ à 0,05 mètre du bord du profilé, tandis que la branche de droite se trouve à environ 0,35 centimètre de l'autre bord. Après déplacement vers la gauche selon la flèche 300, la disposition est inversée, et l'on peut ainsi obtenir un déplacement transversal de l'ordre de 0,60 mètre d'une ou plusieurs rangées, déplacement qui correspond à la largeur d'une allée A, dont la position est alors aisément choisie selon le cas. Une telle conception mobile de l'agencement de serre permet naturellement d'accroître encore la densité de culture, et il sera aisé d'atteindre une densité de treize rosiers par $m^2$.

Compte tenu de la longueur des branches latérales des tubulures en U, il peut s'avérer opportun d'apporter quelques aménagements visant à préserver le parallélisme de ces branches, et aussi à éviter tout risque de basculement d'une rangée en position de porte-à-faux.

Selon un premier aménagement illustré en figure 7, il est possible de disposer des entretoises rigides 52 entre les branches 3 d'une tubulure en U 2, de façon à préserver le parallélisme desdites branches lors du roulement, ces entretoises étant par exemple constituées par une portion centrale 53 se raccordant en ses extrémités à des colliers à roulement à billes 54 enserrant les branches 3 associées de la tubulure en U. De telles entretoises rigides 52 préservent ainsi à la fois le parallélisme et la distance relative entre les branches. Par ailleurs, certains profilés 16 peuvent présenter à leurs extrémités une butée 51 réalisée sous la forme d'un crochet, afin de limiter la course de déplacement : de telles butées 51 sont visibles sur la figure 7, et il est aisé de comprendre que chaque butée contacte en fin de course l'une ou l'autre branche 3 de la tubulure U 2 selon le sens du déplacement, en assurant de surcroît un anti-basculement de la rangée concernée. Il est par ailleurs possible de prévoir des éléments rigides pour raccorder entre eux certains profilés 16, afin de rigidifier l'ensemble mobile constitué par ces profilés. Une telle structure en treillis 55 est illustrée sur la figure 7, avec des branches 56 parallèles aux branches 3 de la tubulure en U, et des branches de raccordement obliques 57. Il va de soi que l'on pourrait également prévoir un raccordement différent, en ménageant par exemple deux barres parallèles dans la région centrale des profilés 16.

Dans cette variante, les rails 50 de la tubulure en U 2 sont supportés par une succession de plots 10, dont la hauteur est naturellement choisie pour favoriser le travail effectué sur les végétaux concernés et la surveillance de la culture, tout en étant suffisante pour ménager une accessibilité en dessous du niveau desdits rails permettant un entretien aisé du sol, en particulier une hauteur se situant entre 0,2 et 0,6 mètre.

L'homme de l'art pourra prévoir d'autres aménagements dans cette structure mobile, afin de faciliter le déplacement transversal des allées : par exemple, ce déplacement pourra être effectué par des moyens mécanisés, ou encore simplement à la main au moyen d'un outil associé, en particulier un outil enserrant une portion prédéterminée de l'une des branches de la tubulure en U associée à la rangée à déplacer.

On va maintenant décrire, en se référant aux figures 9 à 13, une variante de réalisation des plaques collectrices des eaux d'arrosage, selon laquelle ces plaques collectrices ne sont pas réalisées sous la forme d'une feuille souple dont le bord inférieur d'extrémité pénètre dans la fente d'un tuyau de drainage, mais sont réalisées sous la forme d'une tôle cintrée rivetée à un tube de drainage associé. Il est à noter que les organes d'alimentation en goutte à goute n'ont pas été représentés sur les vues des figures 9 et 13 pour plus de clarté, mais que de tels organes seront néanmoins avantageusement prévus.

On distingue ainsi sur la figure 9 une tôle cintrée $14_1$, ici commune à deux blocs de substrat 13 adjacents, cette tôle cintrée étant insérée sous lesdits blocs, et présentant une portion inférieure en gouttière. La gouttière de réception $15_1$ associée est alors un tube sur lequel est disposée transversalement la portion inférieure de la tôle cintrée $14_1$, un rivet évidé 60 assurant simultanément la liaison mécanique entre ladite tôle cintrée et ledit tube et l'écoulement des eaux d'arrosage dans ledit tube, ainsi que cela apparaît plus clairement sur le détail en coupe de la figure 10. Dans la pratique, on utilisera pour le rivet 60 un simple rivet POP dont on a chassé la tige.

La tôle cintrée $14_1$ pourra être une tôle d'aluminium, et le tube de drainage $15_1$ être métallique ou en polychlorure de vinyle.

Il est alors intéressant d'utiliser pour les blocs de substrat 13 des pains de laine de roche enveloppés par une gaine souple 62 en matière plastique : en effet, en prévoyant une légère inclinaison du bloc de substrat 13 selon sa direction longitudinale (par exemple une pente de 0,4 %), il suffit de pratiquer une incision 63 dans la gaine souple 62 au voisinage de l'extrémité basse dudit bloc, et de disposer la tôle cintrée $14_1$ associée au niveau de cette incision, ce qui permet alors de prévoir des tôles cintrées étroites, légères, et peu encombrantes.

En variante, comme illustré aux figures 11 à 13, la portion inférieure de chaque tôle cintrée $14_1$ pourra

être rivetée sur un petit manchon cylindrique 61 dans lequel passe le tube de drainage $15_1$ associé, alors percé au niveau du rivet évidé 60 : ceci permet de préassembler en atelier des ensembles tôle cintrée-manchon, avant d'effectuer le montage in situ. On pourra naturellement prévoir de réaliser le tube de drainage $15_1$ selon une succession de tronçons, dont les extrémités pénètrent dans un manchon 61 associé : dans ce cas, il suffit de prévoir un espacement entre tronçons successifs au niveau du rivet 60 correspondant, ce qui évite d'avoir à percer le tube de drainage au niveau des rivets évidés (dans ce cas, la vue de la figure 12 permet de voir l'extrémité non coupée d'un tronçon $15_1$, sans perçage, enfilée dans le manchon associé 61, la surface extérieure dudit tronçon venant alors de préférence au contact de la surface intérieure dudit manchon).

La figure 13 permet de distinguer l'ensemble ainsi monté, avec une étroite tôle cintrée $14_1$ associée à chaque bloc de substrat.

Il va de soi que cette dernière variante de plaque collectrice pourra être utilisée pour les différents agencements précédemment décrits.

L'invention n'est pas limitée aux modes de réalisation qui viennent d'être décrits, mais englobe au contraire toute variante reprenant, avec des moyens équivalents, les caractéristiques essentielles figurant aux revendications.

## Revendications

1. Agencement de serre pour la culture hors sol, notamment la culture des rosiers, caractérisé par le fait qu'il comporte au moins une tubulure en U (2) disposée à distance du sol et dans un plan sensiblement horizontal, ladite tubulure étant parcourue par un fluide destiné au chauffage de la serre, et servant également par ses deux branches (3) de moyen de supportage surélevé pour des empilages (100 ; 101) organisant la culture hors sol, chaque empilage (100 ; 101) comportant un bloc inférieur de support (11) en matériau thermiquement isolant, ledit bloc étant surmonté d'au moins un bloc de substrat de culture hors sol (13) avec interposition d'une plaque collectrice ( 14) permettant de canaliser l'écoulement des eaux d'arrosage vers une gouttière de réception associée (15) également supportée par la tubulure en U (2).

2. Agencement de serre selon la revendication 1, caractérisé par le fait qu'il comporte une pluralité de profilés (16) disposés transversalement sur les branches (3) de la tubulure en U (2), de façon à constituer des traverses de support sur lesquelles reposent les empilages (100 ; 101) et la ou les gouttières de réception associées (15).

3. Agencement de serre selon la revendication 2, caractérisé par le fait que les profilés (16) formant traverses supportent également des tuyaux d'alimentation en goutte à goutte (17) permettant d'assurer une alimentation permanente en eau et/ou en solution nutritive.

4. Agencement de serre selon l'une des revendications 1 à 3, caractérisé par le fait que chaque bloc inférieur de support (11) se présente sous la forme d'un pain allongé, disposé sensiblement parallèlement aux branches (3) de la tubulure en U (2), la face supérieure (20) dudit pain étant inclinée pour favoriser l'écoulement des eaux d'arrosage vers la gouttière associée ( 15).

5. Agencement de serre selon la revendication 4, caractérisé par le fait que certains au moins des blocs inférieurs de support (11) sont constitués de deux pains ( 11', 11") empilés l'un sur l'autre, avec interposition d'un matériau isolant (12) formant écran thermique.

6. Agencement de serre selon la revendication 4 ou 5, caractérisé par le fait que chaque bloc inférieur de support (11) est surmonté d'un bloc de substrat (13) se présentant également sous la forme d'un pain allongé, ledit bloc de substrat supportant directement une pluralité de blocs unitaires (21) en laine de roche.

7. Agencement de serre selon la revendication 6, caractérisé par le fait que le bloc de substrat (13) est un pain en fibres de bois ou en laine de roche, dont la face inférieure (22) est inclinée en correspondance avec la face supérieure (20) du bloc inférieur de support (11).

8. Agencement de serre selon l'une des revendications 1 à 7, caractérisé par le fait que les blocs inférieurs de support (11) sont en polystyrène expansé ou analogue.

9. Agencement de serre selon l'une des revendications 2 à 8, caractérisé par le fait que les profilés (16) formant traverses sont maintenus transversalement en position sur les branches (3) de la tubulure en U (2), par exemple au moyen de cornières rapportées (23) en forme de C, avec possibilité d'un coulissement longitudinal sur lesdites branches.

10. Agencement de serre selon l'une des revendications 2 à 8, caractérisé par le fait que les profilés (16) formant traverses sont mobiles transversalement, grâce à un montage roulant des branches (3) de la tubulure en U (2) sur des rails associés (50), de façon à pouvoir déplacer simultanément tous les empilages (100 ; 101) supportés par les branches (3) de cette tubulure en U (2), ladite tubulure en U comportant des connecteurs à rotation libre (6) aux deux extrémités de chacune de ses branches ( 3 ).

11. Agencement de serre selon la revendication 10, caractérisé par le fait que des entretoises rigides (52) sont prévues entre les branches (3) de la tubulure en U (2) de façon à préserver le parallélisme desdites branches lors du roulement, lesdites entretoises étant fixées auxdites branches par des colliers à roulement (54).

12. Agencement de serre selon la revendication 10 ou 11, caractérisé par le fait que certains profilés (16) présentent à leurs extrémités une butée (51) pour limiter la course de déplacement, ladite butée contactant en fin de course l'une ou l'autre branche (3) de la tubulure en U (2) selon le sens du déplacement.

13. Agencement de serre selon l'une des revendications 10 à 12, caractérisé par le fait que des éléments rigides (56, 57) sont prévus pour raccorder entre eux certains profilés (16), afin de rigidifier l'ensemble mobile constitué par ces profilés.

14. Agencement de serre selon la revendication 4, et la revendication 9 ou 10, caractérisé par le fait que les profilés (16) formant traverses supportent deux rangées parallèles de blocs inférieurs de support (11) mis bout à bout, ces deux rangées étant distantes l'une de l'autre pour définir un couloir central (C) permettant de loger la ou les gouttières de réception associées (15) et les éventuels tuyaux d'alimentation en goutte à goutte ( 17).

15. Agencement de serre selon la revendication 4, et la revendication 9 ou 10, caractérisé par le fait que les profilés (16) formant traverses supportent deux rangées parallèles de blocs inférieurs de support (11) mis bout à bout, ces deux rangées étant accolées l'une à l'autre pour définir deux couloirs latéraux (C', C") permettant de loger les deux gouttières de réception associées (15) et les éventuels tuyaux d'alimentation en goutte à goutte (17).

16. Agencement de serre selon la revendication 4, et la revendication 9 ou 10, caractérisé par le fait que les profilés (16) formant traverses supportent plus de deux rangées parallèles de blocs inférieurs de support (11) mis bout à bout, en particulier trois rangées, ces rangées étant distantes l'une de l'autre pour définir des couloirs ($C_1$, $C_2$) permettant de loger la ou les gouttières de réception associées (15) et les éventuels tuyaux d'alimentation en goutte à goutte (17).

**17.** Agencement de serre selon l'une des revendications 14 à 16, caractérisé par le fait que les rangées parallèles de blocs inférieurs de support (11) sont disposées de manière à ne pas être directement au-dessus d'une des branches (3) de la tubulure en U (2).

**18.** Agencement de serre selon l'une des revendications 1 à 17, caractérisé par le fait que la ou les plaques collectrices (14) sont réalisées sous la forme d'une feuille souple en matière plastique, et que la ou les gouttières de réception associées (15) sont réalisées sous la forme d'un tuyau (15) fendu longitudinalement, dont la fente longitudinale (15″) reçoit le bord inférieur d'extrémité des feuilles souples (14) pour la canalisation de l'écoulement des eaux d'arrosage.

**19.** Agencement de serre selon l'une des revendications 1 à 17, caractérisé par le fait que la ou les plaques collectrices (14$_1$) sont réalisées sous la forme d'une tôle cintrée présentant une portion inférieure en gouttière, et que la ou les gouttières de réception associées (15$_1$) sont réalisées sous la forme d'un tube sur lequel est disposé transversalement ladite portion inférieure, un rivet évidé (60) assurant simultanément la liaison mécanique entre ladite tôle cintrée et ledit tube et l'écoulement des eaux d'arrosage dans ledit tube.

**20.** Agencement de serre selon la revendication 19, caractérisé par le fait que la portion inférieure de la tôle cintrée (14$_1$) est solidarisée par le rivet évidé (60) à un petit manchon cylindrique (61) dans lequel passe le tube (15$_1$) alors percé au niveau dudit rivet évidé.

**21.** Agencement de serre selon la revendication 19 ou 20, caractérisé par le fait que chacun des blocs de substrat (13) est légèrement incliné selon sa direction longitudinale et est enveloppé par une gaine souple (62) présentant une incision (63) au voisinage de l'extrémité basse dudit bloc de substrat, une étroite tôle cintrée (14$_1$) étant associée à chaque bloc de substrat (13) et étant alors seulement prévue au niveau de l'incision (63) correspondante.

**22.** Agencement de serre selon la revendication 9 et l'une des revendications 11 à 21, caractérisé par le fait que la tubulure en U ( 2) est supportée par une succession de plots (10), dont la hauteur est choisie pour favoriser le travail à effectuer sur les végétaux concernés et la surveillance de la culture, tout en étant suffisante pour ménager une accessibilité en dessous du niveau de ladite tubulure en U permettant un entretien aisé du sol, en particulier entre 0,2 et 0,6 mètre.

**23.** Agencement de serre selon la revendication 10 et l'une des revendications 11 à 21, caractérisé par le fait que les rails (50) de la tubulure en U (2) sont supportés par une succession de plots (10), dont la hauteur est choisie pour favoriser le travail à effectuer sur les végétaux concernés et la surveillance de la culture, tout en étant suffisante pour ménager une accessibilité en dessous du niveau desdits rails permettant un entretien aisé du sol, en particulier entre 0,2 et 0,6 mètre.

**24.** Agencement de serre selon l'une des revendications 1 à 23, caractérisé par le fait que la tubulure en U (2), ou à tout le moins les deux branches (3) de celle-ci, est réalisée en métal, tandis que la ou les gouttières de réception (15) et les éventuels tuyaux d'alimentation en goutte à goutte (17) sont en matière plastique.

**25.** Agencement de serre selon l'une des revendications 2 à 24, caractérisé par le fait que les profilés (16) formant traverses présentent une longueur permettant de disposer jusqu'à six rangées parallèles de tubulures en U (2) par chapelle, en particulier entre 0,65 et 0,95 mètre.

# FIG.1

EP 0 452 217 A1

FIG. 2

FIG. 3

FIG_5

FIG_4

EP 0 452 217 A1

FIG. 6

EP 0 452 217 A1

FIG_7

FIG.8a

FIG.8b

EP 0 452 217 A1

FIG. 9

FIG. 10

FIG. 11

FIG. 12

FIG. 13

Office européen
des brevets

**RAPPORT DE RECHERCHE EUROPEENNE**

Numero de la demande

EP    91 40 0963

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | EP-A-0 165 356 (DE BENTZMANN)<br>* page 1, ligne 35 – page 2, ligne 28; figures 1,2 * | 1,2,10 | A01G31/02<br>A01G9/14 |
| A,D | EP-A-0 169 687 (KABUSHIKI KAISHA SEIWA)<br>* page 9, ligne 32 – page 11, ligne 10 *<br>* page 12, ligne 22 – page 13, ligne 20; figures 1-3 * | 1,3,4,6<br>7 | |
| A,D | EP-A-0 300 536 (ROCKWOOL LAPINUS)<br>* page 5, ligne 13 – ligne 45; figures 1-4 * | 1,4,6 | |
| A,D | US-A-2 491 271 (KING)<br>* colonne 1, ligne 35 – colonne 2, ligne 27; figures 1,2 * | 1,21 | |
| A,D | DE-U-8 713 639 (MÜNSTER)<br>* revendications 1-9; figures 1-4 * | 1 | |

**DOMAINES TECHNIQUES RECHERCHES (Int. Cl.5)**

A01G

Le présent rapport a été établi pour toutes les revendications

| Lieu de la recherche | Date d'achèvement de la recherche | Examinateur |
|---|---|---|
| LA HAYE | 26 JUILLET 1991 | PERNEY Y. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant